Europäisches Patentamt

European Patent Office

Office européen des brevets

(11) Numéro de publication: **0 015 183 B1**

(12) **FASCICULE DE BREVET EUROPEEN**

(45) Date de publication du fascicule du brevet: **04.05.83**

(51) Int. Cl.³: **A 46 B 13/02, A 46 B 15/00**

(21) Numéro de dépôt: **80400167.5**

(22) Date de dépôt: **04.02.80**

(54) **Brosse à dents électrique.**

(30) Priorité: **22.02.79 FR 7904512**

(43) Date de publication de la demande:
**03.09.80 Bulletin 80/18**

(45) Mention de la délivrance du brevet:
**04.05.83 Bulletin 83/18**

(84) Etats contractants désignés:
**AT BE CH DE FR GB IT LU NL SE**

(56) Documents cités:
**CH - A - 562 585**
**DE - A - 2 400 787**
**FR - A - 537 026**
**US - A - 2 160 836**
**US - A - 2 184 850**
**US - A - 2 840 837**
**US - A - 3 050 072**
**US - A - 3 451 086**
**US - A - 3 551 932**
**US - A - 3 661 018**
**US - A - 3 739 416**
**US - A - 3 964 122**
**US - A - 4 084 280**

(73) Titulaire: **Société Civile VIDA**
**55, rue de Prony**
**F-75010 Paris (FR)**

(72) Inventeur: **Hayat Victor**
**55 rue de Prony**
**F-75017 Paris (FR)**

(74) Mandataire: **Roger-Petit, Jean-Camille et al,**
**OFFICE BLETRY 2, Boulevard de Strasbourg**
**F-75010 Paris (FR)**

Courier Press, Leamington Spa, England.

## Brosse à dents électrique

L'invention a pour objet une brosse à dents électrique du type dans lequel la brosse proprement dite est de révolution et entrainée en rotation continue autour de son axe longitudinal par un petit moteur électrique, alimenté par pile, accumulateur, ou prise de courant.

On connait de très nombreuses brosses à dents de ce type.

C'est ainsi notamment que le brevet US—A—2 840 837 décrit une brosse à dents dans le manche creux de laquelle est logé un moteur électrique susceptible d'entrainer en rotation continue la brosse proprement dite, qui est de révolution, et dont l'extrémité de l'axe est maintenue par l'extrémité d'une pièce en forme de gouttière prolongeant son manche.

Le brevet US—A—2 184 850 décrit une brosse mécanique comportant un axe longitudinal rotatif supportant la brosse proprement dite, ledit axe étant prolongé par un cône en caoutchouc dont la base peut être utilisée pour masser les dents.

Les brevets US—A—3 964 122 et 3 050 072 décrivent des dispositifs de nettoyage de dents susceptibles d'être introduits dans l'espace interdentaire dans un but de nettoyage, le dispositif du dernier de ces deux brevets consistant en une pointe.

La brosse à dents électrique suivant la présente invention est caractérisée en ce que l'axe longitudinal de la brosse proprement dite est prolongé par une pointe en bois ou en matière plastique susceptible d'être introduite dans l'éspace intermédiaire pour masser la papille et nettoyer les faces mésiales et distales des dents.

Un léger mouvement de va-et-vient de faible amplitude peut être imprimé à la brosse dans certains cas de parodontopathologie pour éliminer plus complètement la plaque dentaire, agent causal essentiel des maladies des dents, et du parodonte; ce mouvement de va-et-vient de la brosse peut lui être communiqué, par tout dispositif approprié, notamment par un ergot transversal fixe engagé dans une rainure de forme appropriée solidaire de l'axe de la brosse, ou par un ergot transversal solidaire de l'axe engagé dans une rainure intérieure de forme appropriée d'un cylindre coaxial fixe.

Suivant une autre caractéristique de l'invention, la brosse proprement dite est partiellement entourée d'une gouttière protectrice, de façon connue en soi, et cette gouttière coaxiale se termine par une extrémité relevée en forme de fourchette qui sert de guide libre à l'extrémité de l'axe longitudinal de la brosse proprement dite.

Le dessin annexé montre schématiquement, à titre d'exemple, un mode de réalisation de la présente invention.

La figure 1 est une vue en coupe de la brosse au repos.

La figure 2 est une vue analogue, mais avec de légères variantes, de la brosse prête à être utilisée.

Les figures 3 à 5 sont des vues partielles montrant des variantes.

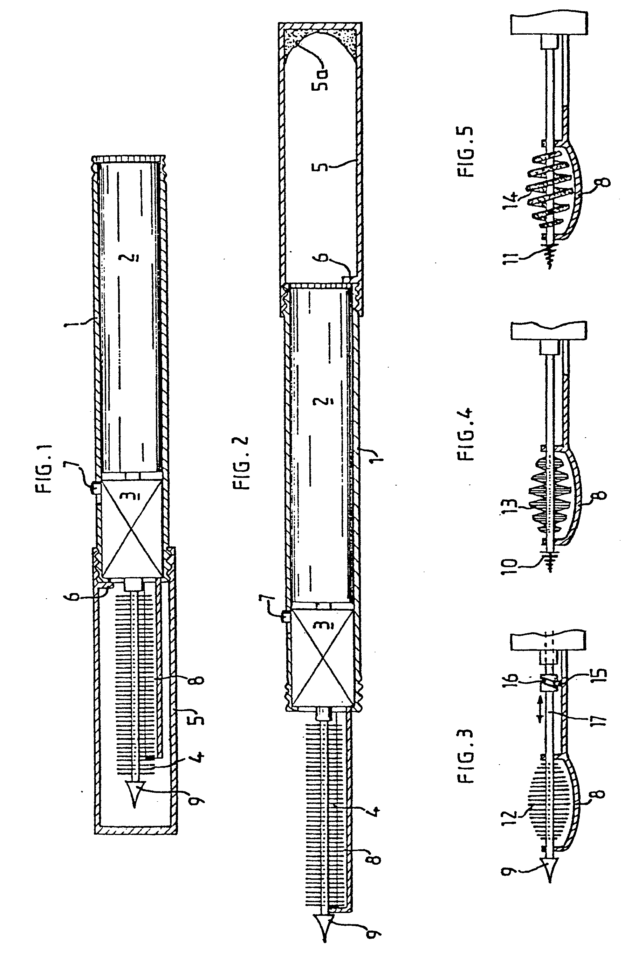

La brosse représentée comporte un manchon cylindrique 1, à l'intérieur duquel sont logés au moins une pile 2 et un moteur rotatif 3, avec son arbre de sortie susceptible d'entraîner en rotation la brosse cylindrique 4; un capuchon vissé 5 protège la brosse 4. Lorsque ce capuchon est dévissé de la partie antérieure de la brosse, comme représenté à la figure 1, et est vissé sur sa partie arrière, comme montré sur la figure 2, son ergot 6 assure la connexion de la pile 2 avec le commutateur-inverseur 7.

Le capuchon représenté à la figure 2 comporte en son fond une cavité permettant de loger un matériau 5a absorbant l'humidité, ou imprégné d'un liquide antiseptique ou autre, ou un comprimé odorant éventuellement volatil, ou une pâte.

Ce commutateur-inverseur 7, à portée d'un des doigts de l'usager, permet d'enclencher le contact et d'inverser le sens du courant dans le moteur 3, et, par conséquent, le sens de rotation de la brosse 4.

Une gouttière 8, concentrique à la brosse 4 et disposé au voisinage de celle-ci, l'enveloppe sur le tiers environ de sa périphérie, et empêche le contact de la brosse avec les tissus buccaux qui n'ont pas besoin d'être brossés (joues, langue, palais ...); cette gouttière peut se terminer par une extrémité relevée en forme de fourchette qui sert de guide libre à l'extrémité de la tige de la brosse, comme montré seulement à la figure 2.

L'axe de la brosse est prolongé par une pointe 9 qui peut être en bois ou en matière plastique, naturelle, artificielle ou synthétique; elle peut aussi être munie de touffes de poils 10, préférablement de longueur décroissante vers l'avant, comme le montre la figure 4, ou en spirale 11, comme le montre la figure 5.

La brosse proprement dite, avec ou sans la gouttière, pourrait être amovible et changeable, au lieu d'être fixe; sa forme pourrait être toute autre que cylindrique, et notamment cylindro-conique; un dispositif mécanique simple pourrait être utilisé pour combiner avec son mouvement rotatif autour de son axe, un mouvement alternatif parallèle à celui-ci, et éventuellement même perpendiculaire à celui-ci; des joints peuvent être prévus pour rendre étanche le manchon cylindrique contenant la pile et le moteur; le capuchon, au lieu d'être vissé, peut être fixé de toute autre mainière.

C'est ainsi que les figures 3 à 5 montrent des brosses dans lesquelles la brosse proprement dite, beaucoup moins longue, est constituée soit de poils 12 uniformément répartis, soit de touffes de poils 13 plus longues au centre qu'aux extrémités, soit de poils montés en spirale 14.

Un mouvement de va-et-vient de faible amplitude peut être communiqué à la brosse 4, ou 12 à 14, et à la pointe 9 à 11, par un ergot transversal 15 engagé dans une rainure de forme appropriée 16 prévue à la périphérie de l'axe 17 de la brosse, comme montré à la figure 3.

## Revendications

1. Brosse à dents électrique dont la brosse proprement dite est de révolution et entraînée en rotation continue autour de son axe longitudinal, caractérisée en ce que l'axe longitudinal (17) de la brosse proprement dite (4) et (12) à (14) est prolongé par une pointe en bois ou en matière plastique (9) susceptible d'être introduite dans l'espace interdentaire pour masser la papille et nettoyer les faces mésiales et distales des dents.

2. Brosse à dents suivant la revendication 1 caractérisée en ce que la pointe en bois ou en matière plastique (9) prolongeant l'axe longitudinal (17) de la brosse proprement dite est munie rudialement de touffes de poils.

3. Brosse à dents suivant la revendication 1 caractérisée en ce que ces touffes de poils radiales sont de longueur décroissante vers l'avant.

4. Brosse à dents suivant l'une quelconque des revendications 2 ou 3 caractérisée en ce que ces touffes de poils radiales sont disposées en spirale sur la pointe en bois ou en matière plastique (9).

5. Brosse à dents électrique suivant l'une quelconque des revendications 1 à 4, dont la brosse proprement dite est enveloppée sur le tiers environ de sa périphérie par une gouttière coaxiale, caractérisée en ce que cette gouttière coaxiale, se termine par une extrémité relevée en forme de fourche qui sert de guide libre à l'extrémité de l'axe longitudinal (17) de la brosse proprement dite.

6. Brosse à dents suivant l'une quelconque des revendications 2 à 4, caractérisé en ce qu'elle comporte des moyens mécaniques tels que la rotation de sa pointe (9) lui confère un mouvement de va-et-vient de faible amplitude.

7. Brosse à dents suivant la revendication 6 caractérisée en ce qu'un ergot radial (15) fixe, solidaire du manche de la brosse et dirigé vers l'axe de rotation (17) de la brosse proprement dite (4) et de la pointe en bois ou en matière plastique qui le prolonge (9), est engagé dans une rainure de forme appropriée (16) prévue à la périphérie de l'axe (17) de la brosse proprement dite.

## Claims

1. An electric toothbrush of which the brush is rotatable and is driven to rotate continuously about is longitudinal axis, characterised in that the longitudinal axis (17) of the brush (4) and (12) to (14) is extended by a point (9) of wood or a plastics material which can be introduced into the interdental spaces to massage the papilla and clean the mesial and distal faces of the teeth.

2. A toothbrush according to claim 1, characterised in that the point of wood or plastics material (9) prolonging the longitudinal axial (17) of the brush is provided with tufts of radially extending bristles.

3. A toothbrush according to claim 2, characterised in that the tufts of radial bristles are of decreasing length towards the front of the brush.

4. A toothbrush according to either claim 2 or claim 3, characterised in that the tufts of radial bristles are arranged in a spiral on the point of wood or plastics material (9).

5. A toothbrush according to any one of claims 1 to 4, of which the brush is shrouded over approximately a third of its periphery by a coaxial gutter, characterised in that the coaxial gutter is terminated by a raised end in the form of a fork which serves to guide freely the end of the longitudinal axis (17) of the brush.

6. A toothbrush according to any one of claims 2 to 4, characterised in that it comprises mechanical means such that the rotation of its point (9) produces a back and forth movement of low amplitude.

7. A toothbrush according to claim 6, characterised in that a fixed radial lug (15), on the handle of the brush and directed towards the axis of rotation (17) of the brush and of the point of wood or plastics material (9) which prolongs the axis, is engaged in a groove of appropriate shape (16) provided at the periphery of the axis (17) of the brush.

## Patentansprüche

1. Elektrische Zahnbürste, deren eigentliche Bürste umläuft und kontinuierlich um ihre Längsachse gedreht wird, dadurch gekennzeichnet, daß die Längsachse (17) der eigentlichen Bürste (4) und (12) bis (14) durch eine Spitze (9) aus Holz oder Kunststoff verlängert ist, die zum Massieren der Papille und zum Reinigen der mesialen und distalen Zahnflächen in den Zahnzwischenraum einführbar ist.

2. Zahnbürste nach Anspruch 1, dadurch gekennzeichnet, daß die die Längsachse (17) der eigentlichen Bürste verlängernde Spitze aus Boiz oder Kunststoff (9) mit radialen Haarbüscheln versehen ist.

3. Zahnbürste nach Anspruch 2, dadurch gekennzeichnet, daß die radialen Haarbüschel eine nach vorn abnehmende Länge besitzen.

4. Zahnbürste nach einem der Ansprüche 2 oder 3, dadurch gekennzeichnet, daß die radialen Haarbüschel auf der Spitze aus Holz oder Kunststoff spiralförmig angeordnet sind.

5. Elektrische Zahnbürste nach einem der Ansprüche 1 bis 4, deren eigentliche Bürste etwa auf einem Drittel ihres Umfanges durch eine koaxiale Rinne eingehüllt ist, dadurch gekennzeichnet, daß die koaxiale Rinne in einem aufgerichteten gabelförmigen Endteil endet, der dazu dient, den Endteil der Längsachse (17) der eigentlichen Bürste frei zu führen.

6. Zahnbürste nach einem der Ansprüche 2 bis 4, dadurch gekennzeichnet, daß sie derartige mechanische Mittel enthält, daß die Drehung ihrer Spitze (9) ihr eine hin- und hergehende Bewegung mit geringer Amplitude erteilt.

7. Zahnbürste nach Anspruch 6, dadurch gekennzeichnet, daß ein fester, radialer Nocken (15), der mit dem Griff der Bürste verbunden ist un gegen die Drehachse (17) der eigentlichen Bürste und der sie verlängernden Spitze aus Holz oder Kunststoff gerichtet ist, in eine am Umfang der Achse (17) der eigentlichen Bürste vorgesehene Rille (16) geeigneter Form eingreift.

FIG.1

FIG.2

FIG.3

FIG.4

FIG.5